# EUROPEAN PATENT APPLICATION

(11) **EP 2 501 018 A1**
(43) Date of publication of application: **19.09.2012**
(21) Application number: 10829721.9
(22) Date of filing: 12.11.2010
(51) Int. Cl.: H02J 13/00, G06Q 50/00

(54) **POWER CONTROLLER FOR ELECTRIC DEVICES, AND TELEPHONE**

(30) Priority: 12.11.2009 JP 2009258600
(71) Applicant: Panasonic Corporation, Kadoma-shi Osaka 571-8501 (JP)
(72) Inventor: IGATA, Yuji, Osaka-shi, Osaka 540-6207 (JP)
(74) Representative: Eisenführ, Speiser & Partner
(86) International application number: PCT/JP2010/006669
(87) International publication number: WO 2011/058761

(57) **Abstract**

Provided are electric devices capable of being subjected to power control suited to the awareness of a resident even when the electric devices within a house are subjected to power control. A power controller (21) for the electric devices is provided with: an input unit (211); a power line communication unit (213); a power information acquisition unit (214) which acquires used power information relating to electric devices registered by the input unit (211) via the power line communication unit (213); a candidate creation unit (216) which creates combination candidate information relating to electric devices to be subjected to power control on the basis of the used power information relating to the respective electric devices acquired by the power information acquisition unit (214) from among the registered electric devices among a plurality of electric devices; a display unit (212) which displays the combination candidate information relating to the electric devices; and a power control unit (218) which controls the power used by the respective electric devices, the power control unit (218) controlling the power used by the electric devices serving as combination candidates in accordance with selection information inputted by the input unit (211).

## Description

### Technical Field

The present invention relates to a power controller for electric devices, and a telephone device.

### Background Art

In recent years, power use at each household has been increasing. For example, an air conditioner and a television set are placed in each room in each house these days. Also, washing machines with driers are becoming common. Therefore, each manufacturer is supplying energy-saving products that consume less power than existing products. However, the overall power use at each household is still increasing.

Under such circumstances, power controllers for controlling power uses in houses have been suggested. Such a power controller controls operations of electric devices, based on the electric power consumed in a house (see Patent Literature 1, for example).

### Citation List

### Patent Literature

PTL 1
   Japanese Patent Application Laid-Open No. 2002-84658

### Summary of Invention

### Technical Problem

When the total power use in a house is determined to exceed the amount of electric power specified in the contract with the electric power company, an existing power controller automatically stops electric devices, based on predetermined priority order.

However, the circumstances of residents change by the minute. Therefore, if the electric devices automatically stop regardless of the awareness of the residents, inconveniences such as electric lamp going off might occur even when there is an unexpected visitor, for example. Further, where the power use in a house does not exceed the amount of electric power specified in the contract with the electric power company, the power use in the house cannot be reduced. As described above, an existing power controller cannot perform power control in accordance with a resident's intention, such as the usage priorities or power use reduction priorities among electric devices.

Therefore, an object of the present invention is to enable power control in accordance with a resident's intention, even when the power control is performed on electric devices in a house.

### Solution to Problem

To achieve the above object, a power controller for electric devices according to the present invention controls the power use by electric devices connected to a power line in a house, and includes: a power line communication section that communicates with the electric devices via the power line; an input section that receives registration information about the electric devices and selection information as input; a power information obtaining section that obtains, via the power line communication section, power use information about electric devices registered at the input section; a candidate creating section that creates information about candidate combinations of electric devices to be subjected to power control, based on the power use information about the respective electric devices obtained by the power information obtaining section from the registered electric devices among the electric devices; a display section that displays the information about the candidate combinations of electric devices; and a power control section that controls the power use by each of the registered electric devices. The power control section controls the power use by a candidate combination of electric devices selected in accordance with the selection information input to the input section.

A telephone device of the present invention characteristically has the above power controller for electric devices mounted thereon.

### Advantageous Effects of Invention

A power controller for electric devices according to the present invention controls the power use by electric devices connected to a power line in a house, and includes: a power line communication section that communicates with the electric devices via the power line; an input section that receives registration information about the electric devices and selection information as input; a power information obtaining section that obtains, via the power line communication section, power use information about electric devices registered at the input section; a candidate creating section that creates information about candidate combinations of electric devices to be subjected to power control, based on the power use information about the respective electric devices obtained by the power information obtaining section from the registered electric devices among the electric devices; a display section that displays the information about the candidate combinations of electric devices; and a power control section that controls the power use by each of the registered electric devices. The power control section controls the power use by a candidate combination of electric devices selected in accordance with the selection information input to the input section. By this means, a resident can consciously select a device to be subjected to power control from the candidate combinations of electric devices displayed on the display section, and can consciously conduct power control on the electric devices in the house. For example, where energy saving mode is enabled as power control on an electric device, the power use in the house can be reduced.

By this means, power control can be performed in accordance with a resident's intention, even when the power control is performed on electric devices in a house.

Since the above described power controller for electric devices is mounted on a telephone device according to the present invention, a resident can consciously select devices to be subjected to power control among the candidate combinations of electric devices displayed on the display section provided on the telephone device, and accordingly, can consciously conduct power control on the electric devices in the house.

### Brief Description of Drawings

FIG.1 is a configuration diagram of a power management system according to an embodiment of the present invention;
FIG.2 is a configuration diagram of a home energy management system according to the embodiment of the present invention;
FIG3 is a block diagram of a distribution board in the home energy management system;
FIG.4 is an external configuration diagram of a telephone device in the home energy management system;
FIG.5 is a block diagram showing the circuit configuration of the telephone device in the home energy management system;
FIG.6 is a diagram for explaining display example displayed on the display section of the telephone device in the home energy management system;
FIG.7 is a diagram for explaining another display example displayed on the display section of the telephone device in the home energy management system;
FIG.8 is a graph for explaining the power use by each electric device in the home energy management system;
FIG.9 is a graph for explaining the total power use by the electric devices in the home energy management system;
FIG.10 is a flowchart for explaining operations of the power controller mounted on the telephone device in the home energy management system;
FIG.11 is a configuration diagram showing another example configuration of a home energy management system according to the embodiment of the present invention;
FIG.12 is a block diagram of a distribution board in the home energy management system shown in FIG.11; and
FIG.13 is a configuration diagram showing yet another example configuration of a home energy management system according to the embodiment of the present invention.

### Description of Embodiments

The following is a description of an embodiment of the present invention, with reference to the accompanying drawings. It should be noted that, in the drawings, same or similar components are denoted by same reference numerals.

### (Embodiment)

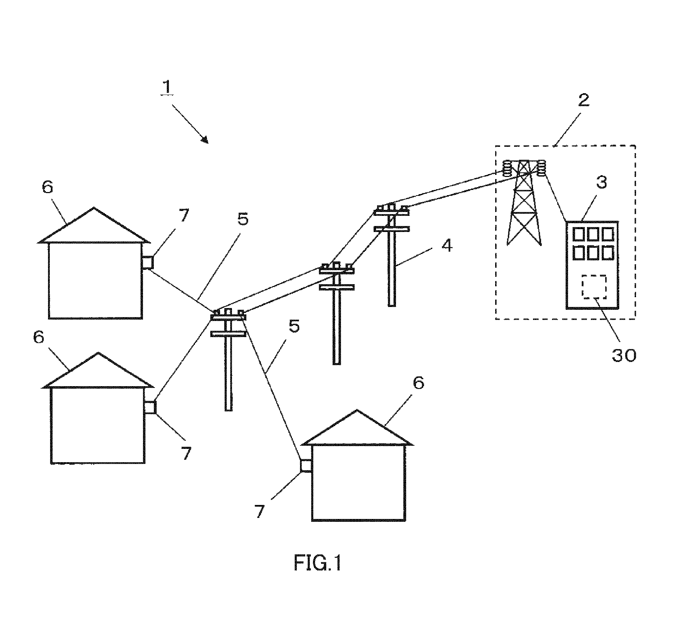

Referring to first to FIG.1, power management system 1 that manages electric power by using electric power networks such as power grids that are managed by electric power company 2 in an embodiment of the present invention is outlined. FIG.1 is a configuration diagram of power management system 1 according to the embodiment of the present invention.

As shown in FIG.1, power management system 1 includes server 30 and watt-hour meters 7 each having a communication function. Server 30 is set within the premises of power management center 3 of electric power company 2. Watt-hour meters 7 are provided at respective houses 6, and are connected to power grids (grids of power lines through which electricity is distributed by utility poles 4 and the like) that are managed by electric power company 2 via power lines 5.

Electric power information for managing the demands for electricity in the areas covered by electric power company 2 is also stored in server 30. Electric power company 2 uses the electric power information as the reference information when calculating electric power charges. Therefore, inquiries from server 30 are made to watt-hour meters 7 at predetermined intervals, and information about the amounts of electric power that have been used at respective houses 6 and have been measured by watt-hour meters 7 is collected via power lines 5. Server 30 collects the electric power information at predetermined intervals, or every hour, for example. It should be noted that server 30 does not necessarily collect the electric power data through lines (power lines 5). For example, a wireless device may be attached to each of watt-hour meters 7, and server 30 may collect the electric power data of watt-hour meters 7 via the wireless devices.

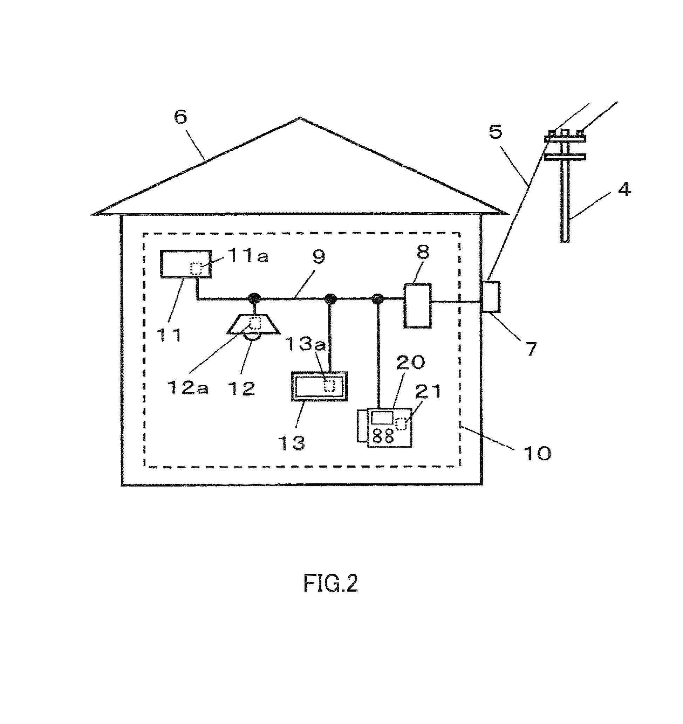

Referring now to FIG.2, home energy management system 10 that operates in association with power management system 1 using electric power networks and is provided in each house 6 is described. FIG.2 is a configuration diagram of home energy management system 10 in each house 6 in the embodiment of the present invention (hereinafter, home energy management system will be also referred to as HEMS).

As shown in FIG.2, commercial power supplied from electric power company 2 is supplied to distribution board 8 in house 6 via power line 5 of utility pole 4 and watt-hour meter 7. The power supplied to distribution board 8 in house 6 is then supplied to power line 9 inside house 6, and the supplied power is further supplied to respective electric devices, such as air conditioner 11, electric lamp 12, television set 13, and telephone device 20, via power line 9. The electric devices are not limited to air conditioner 11, electric lamp 12, television set 13, and telephone device 20. For example, the electric devices may include air purifiers, washing machines, dish washers, dehumidifiers, ventilating fans, refrigerators, microwave ovens, radios, personal computers (hereinafter referred to as "PCs"), audio systems, and the like. For ease of explanation, air conditioner 11, electric lamp 12, television set 13, and telephone device 20 are described herein as examples of the electric devices.

Next, the mechanism to collect the power use information from the respective electric devices and perform control in home energy management system 10 is described. Here, a case where the telephone device 20 is equipped with a function to control the respective electric devices, and the power use information is to be collected is described.

Air conditioner 11 includes power monitoring section 11a, and power monitoring section 11a transmits the results of monitoring of power use detected by a power detecting section (not shown) as the power use information to telephone device 20. Power monitoring section 11a includes the power detecting section that detects power use, and a power line communication section (not shown) that performs power line communications using power line 9. Likewise, electric lamp 12 includes power monitoring section 12a, and television set 13 includes power monitoring section 13a. Electric lamp 12 and television set 13 transmit results of monitoring of power use as the power use information to telephone device 20. Power line communicating sections of power monitoring section 11a, power monitoring section 12a, and power monitoring section 13a receive control signals from telephone device 20, and output control signals to an internal power control section (not shown). By this means, air conditioner 11, electric lamp 12, and television set 13 can perform power control such as an energy saving mode enabling operation or an operation stop in accordance with the control signals from telephone device 20.

Telephone device 20 includes power controller 21 described later. Power controller 21 transmits a control signal for controlling electric power via power line 9, and controls power use by the respective electric devices. As the communication protocol, ECHONET (a registered trade name: Energy Conservation and Homecare Network) or the like is used, to perform communications among devices manufactured by different manufacturers. The electric device on which power controller 21 is mounted is not limited to telephone device 20. Power controller 21 may be mounted on any device that can easily obtain the power use information from electric power company 2 (FIG.1), and may be mounted on a device connected to an external communication line, such as a PC or television set 13.

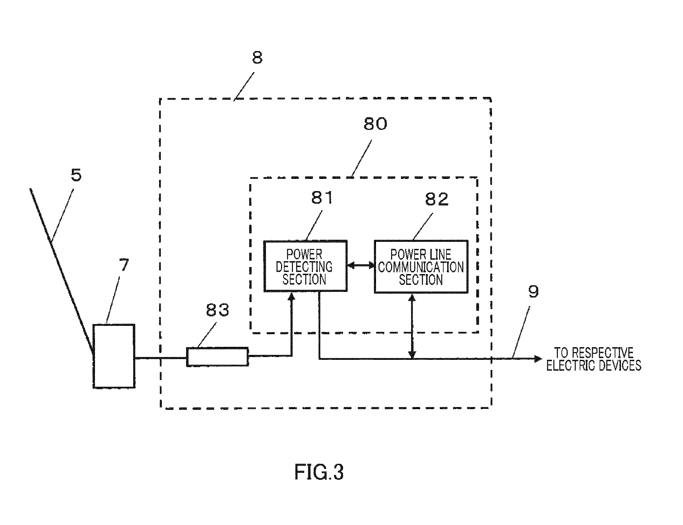

FIG.3 is a block diagram of distribution board 8 of home energy management system 10 according to the embodiment of the present invention.

As shown in FIG.3, distribution board 8 includes power monitoring section 80. Power monitoring section 80 includes power detecting section 81 that detects the total power use at house 6, and power line communication section 82 that performs communications using power line 9. Power monitoring section 80 transmits the results of monitoring of power use detected by power detecting section 81 as the power use information to telephone device 20.

Commercial power supplied from power line 5 via watt-hour meter 7 is supplied to power line 9 in house 6 via breaker 83 that prevents overcurrent conditions. When the total power use at each house 6 exceeds the amount of electric power specified in the contract with electric power company 2, breaker 83 is activated, and the power supplies to the electric devices connected to breaker 83 are suspended. As a result, the power sources of the respective electric devices are reset (initialized), and various inconveniences are caused. For example, timer recording information in television set 13 is erased, and timer setting in a rice cooker is initialized and cancelled.

Each manufacturer is supplying energy-saving products with lower power consumption than that of existing products. However, the number of electric appliances used at each house is increasing, and the power use at each house is on a rising trend. A large number of electric devices are set in house 6. For example, electric devices with the latest functions, such as an air purifier, an air conditioner equipped with an air purifier, and a thin-screen television set, are set in each of the rooms in house 6. Also, electric devices that consume large amounts of electric power, such as washing machines with driers and dish washers with driers, are becoming common.

In such circumstances, there has been an attempt to control the power use by the electric devices in house 6 by setting a power controller in house 6.

As a comparative example to understand the present invention more easily, an existing power controller is first described.

If the total power use in house 6 is determined to be larger than the amount of electric power specified in the contract with electric power company 2, an existing power controller stops the corresponding electric device based on predetermined order of priorities, to reduce the power use. As a result, the breaker of distribution board 8 in house 6 is prevented from tripping, and all the electric devices in house 6 are prevented from being disabled. However, the circumstances of the residents change by the minute. Therefore, if the electric devices automatically stop regardless of the awareness of the residents, inconveniences such as electric lamp 12 going off might occur even when there is an unexpected visitor, for example.

Electric power company 2 is also considering a plan to vary electric power charges in accordance with the demands for electricity in the area, such as to make the nighttime power charges lower than the daytime power charges. For example, there has been a suggestion to manage the electric power in an entire power grid, calculate the electric power charges by the hour, and provide power charge information by combining watt-hour meter 7 having a communication function (such as an AMI: Advanced Metering Infrastructure) with a power grid (a smart grid formed by applying information technology to a power grid, for example). However, where the power use within house 6 does not exceed the amount of electric power specified in the contract with electric power company 2, the existing power controller is not activated, and cannot perform power control in accordance with electric power charges and the circumstances of residents. Therefore, the existing power controller cannot perform power control in accordance with the intention of a resident, such as putting priority on the use of the electric devices or on the electric power charges. As a result, the power use in house 6 cannot be reduced.

To counter this problem, power controller 21 (FIG.2) of this embodiment allows residents to consciously choose which devices are to be subjected to power control, so that, even when the power use in house 6 does not exceed the amount of electric power specified in the contract with electric power company 2, power control can be consciously performed on the electric devices in house 6. By this means, power control can be performed in accordance with a resident's intention, even when the power control is performed on the electric devices in house 6. If the electric devices are put into energy saving mode in the power control, the power use in house 6 can be reduced.

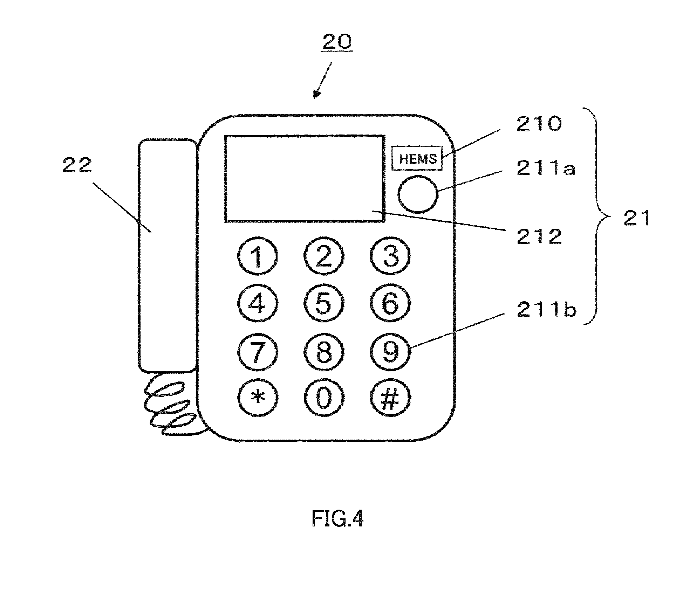

Next, a specific structure is described through an example of telephone device 20 having power controller 21 mounted thereon. FIG.4 is an external configuration diagram of telephone device 20 of home energy management system 10 according to the embodiment of the present invention.

As shown in FIG.4, telephone device 20 includes button section 211b that also serves as the operation input function for power controller 21, and handset 22 for audio communications. As a communication section described later is connected to an external communication line, audio communications with a telephone device placed in another house 6, on company premises, in a government office, or the like, can be performed.

Button section 211b includes ten number input buttons "0" through "9", and control buttons such as "#" and "*" buttons. Using the number input buttons, a telephone number or selection information for selecting a menu number is input.

Handset 22 includes a speaker (not shown) that outputs sound, and a microphone (not shown) to which sound is input. Using the speaker and the microphone, handset 22 performs audio communications.

Telephone device 20 also includes power controller 21 that includes HEMS button 211a, HEMS lighting section 210, and display section 212 on the surface side of telephone device 20. HEMS button 211a operates in association with button section 211b. HEMS lighting section 210 has a lighting color that changes with operations on HEMS button 211a.

HEMS button 211a is used to register an electric device to be subjected to power control, for example. HEMS button 211a is operated to enter into a registration mode, and the number input buttons of button section 211b are used to input the ID number of the electric device to be registered. As HEMS button 211a is operated, HEMS lighting section 210 changes the lighting color to "red" during the registration mode, and to "green" or the like when the setting is completed. In this manner, a user is notified of the setting status. Display section 212 displays operation information about the registration and power control to residents. Power controller 21 will be described later in detail.

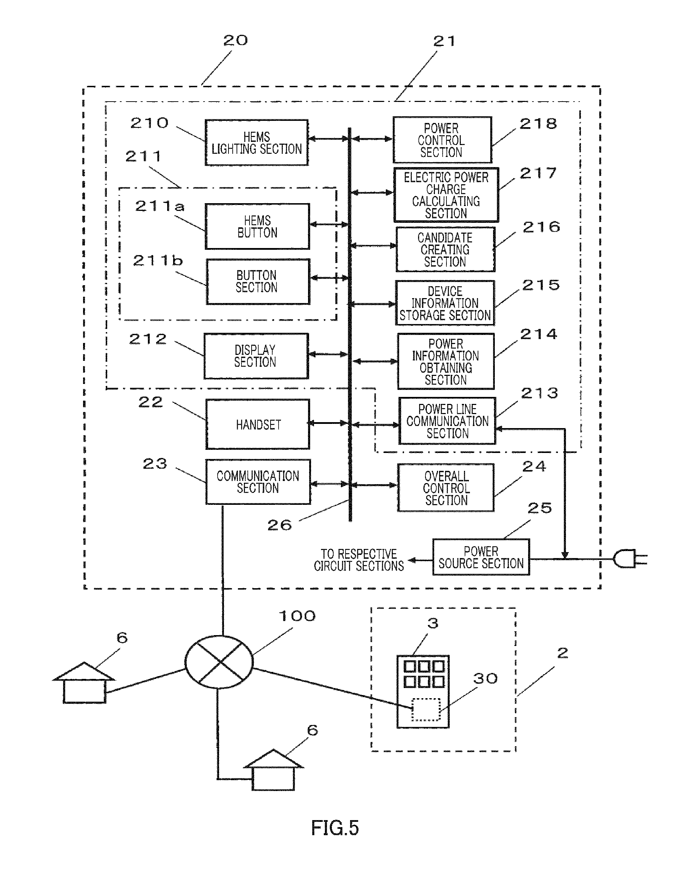

Next, the circuit configuration of telephone device 20 is described. FIG.5 is a block diagram showing the circuit configuration of telephone device 20 of home energy management system 10 according to the embodiment of the present invention.

As shown in FIG.5, telephone device 20 includes power controller 21, handset 22, communication section 23, and overall control section 24. Those units and circuit sections are connected via bus 26.

Communication section 23 is connected to communication link 100 outside house 6. Telephone device 20 can communicate with other houses 6 and server 30 of power management center 3 of electric power company 2 via communication link 100. Electric power company 2 (FIG.1) transmits power charge information from server 30 via communication link 100, for example. Telephone device 20 of each house 6 obtains the transmitted power charge information via communication link 100.

Overall control section 24 controls power controller 21, handset 22, and communication section 23.

Telephone device 20 also includes power source section 25. Power source section 25 supplies power to the respective circuit sections and units, and is connected to power line 9 in house 6.

In this structure, telephone device 20 is always connected to communication link 100 to perform audio communications. Therefore, with power controller 21 being incorporated into telephone device 20, the power charge information transmitted from electric power company 2 can be obtained without any addition of a circuit or the like. Alternatively, electric power company 2 may transmit power charge information, using the power grid of power line 5. In that case, power controller 21 obtains the power charge information via power line 5 and power line 9.

Next, the structure of power controller 21, which characterizes this embodiment, is described in detail.

Power controller 21 includes power line communication section 213, input section 211, power information obtaining section 214, device information storage section 215, candidate creating section 216, display section 212, and power control section 218.

Power line communication section 213 performs power line communications, and communicates with distribution board 8, air conditioner 11, electric lamp 12, and television set 13 via power line 9.

Input section 211 includes HEMS button 211a and button section 211b. Registration information about the electric devices to be subjected to power control and to be registered, such as distribution board 8, air conditioner 11, electric lamp 12, and television set 13, and device selection information to be used at the time of power control are input to input section 211. Button section 211b is used as the dial buttons of the telephone function. At the time of registration, HEMS button 211a and button section 211b are made to cooperate, and the subject device is registered. For example, when HEMS button 211a is pressed, information about the registerable devices is displayed on display section 212 described later. A resident then inputs the select numbers of the devices to be registered through button section 211b.

Power information obtaining section 214 obtains power use information about the electric devices registered through the operation of input section 211, such as distribution board 8, air conditioner 11, electric lamp 12, and television set 13, via power line communication section 213.

Device information storage section 215 stores the power use information about distribution board 8, air conditioner 11, electric lamp 12, and television set 13, each of which obtained by power information obtaining section 214.

Candidate creating section 216 creates information about candidate combinations of devices to be subjected to power control such as an energy saving mode enabling operation, among the registered devices: air conditioner 11, electric lamp 12, and television set 13.

Display section 212 displays the electric devices to be put into the energy saving mode, and the candidate combinations of electric devices to be put into the energy saving mode. By this means, a resident can immediately check the devices to be subjected to power control, and can consciously determine power control.

Power control section 218 controls the powers to be used by air conditioner 11, electric lamp 12, and television set 13 which are registered. Power control section 218 controls the power to be used by the candidate combination of electric devices selected through input section 211, among the candidate combinations of electric devices displayed on display section 212. Power control section 218 then transmits a control signal for the energy saving mode to the subject electric devices via power line communication section 213 and power line 9, and the target devices enter into the energy saving mode. Accordingly, the power to be used by the subject electric devices in house 6 can be reduced. The energy saving mode will be described later in detail.

With power controller 21 having the above structure, a resident can consciously select, through button section 211b, the number of a desired candidate from the information about the candidate combinations of electric devices to be subjected to power control, and can consciously conduct power control on the electric devices in house 6. Accordingly, power control can be performed in accordance with a resident's intention, even when the power control is performed on the electric devices in house 6.

Power controller 21 also includes electric power charge calculating section 217. Electric power charge calculating section 217 calculates individual electric power charges based on power charge information supplied from electric power company 2 and the power use information about air conditioner 11, electric lamp 12, and television set 13. Based on the calculated individual electric power charges, electric power charge calculating section 217 calculates a total electric power charge based on the individual electric power charges for each of the candidate combinations of electric devices. Electric power charge calculating section 217 calculates individual electric power charges, and a total electric power charge based on the individual electric power charges every time power charge information is transmitted from electric power company 2. Electric power charge calculating section 217 also calculates a total electric power charge based on the actual total power use (the power use information) detected by power monitoring section 80 of distribution board 8.

Where electric power charge calculating section 217 is provided, display section 212 displays total electric power charge information based on the individual electric power charges for combined electric devices, as well as the candidate combinations of electric devices. Display section 212 updates the display contents every time electric power charge calculating section 217 newly calculates individual electric power charges and a total electric power charge. Accordingly, a resident can immediately check the latest electric power charge. While keeping the electric power charge in mind, the resident can select, through button section 211b, the number of a desired candidate among the information about the candidate combinations of electric devices to be subjected to power control, and thereby consciously conduct power control on the electric devices in house 6.

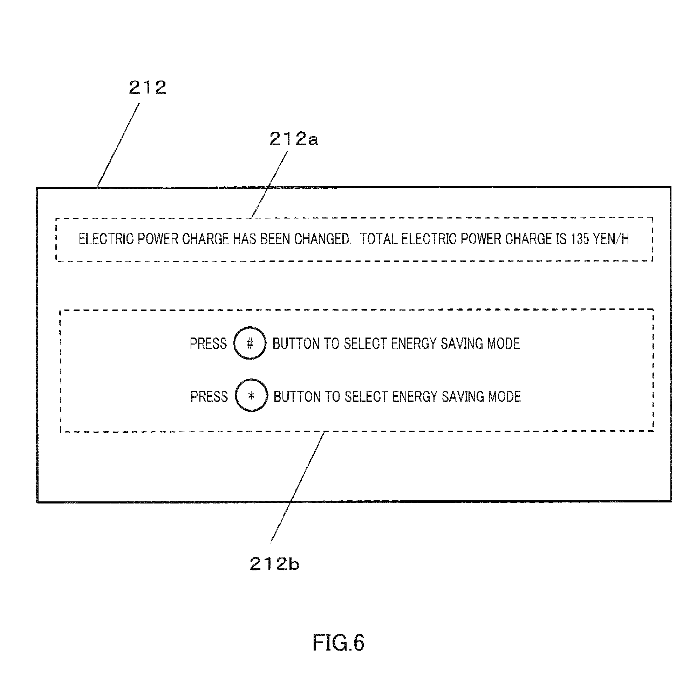

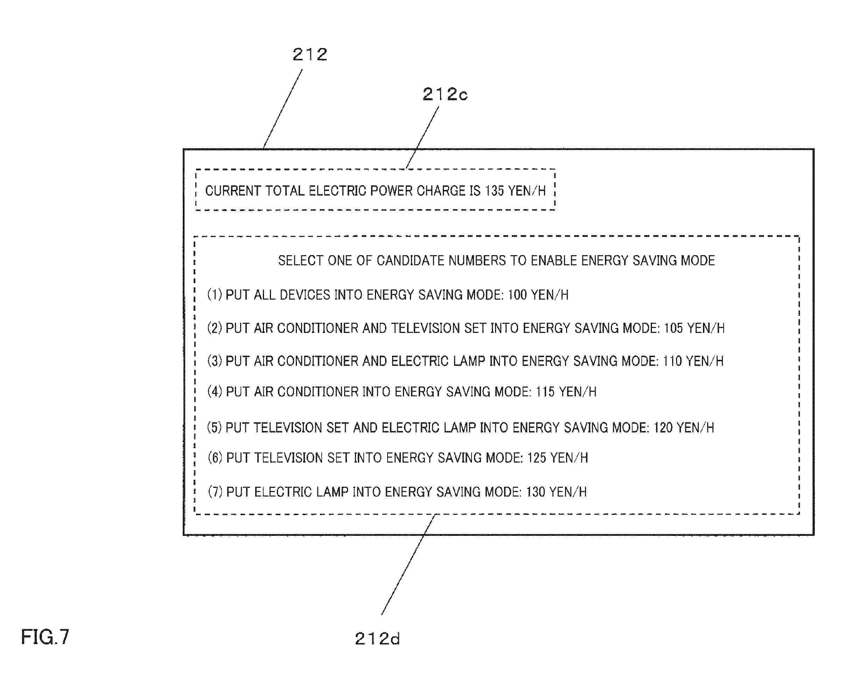

Referring now to FIGS.6 and 7, display examples to be displayed on display section 212 are described. FIG.6 is a diagram for explaining a display example displayed on display section 212 of telephone device 20 of home energy management system 10 according to the embodiment of the present invention. FIG.7 is a diagram for explaining another display example displayed on display section 212 of telephone device 20 of home energy management system 10 according to the embodiment of the present invention.

As shown in FIG.6, when power controller 21 receives power charge information transmitted from server 30 (FIG.5) of electric power company 2, message 212a is displayed on display section 212. That is, power controller 21 obtains information about the total power use in house 6 from power monitoring section 80 of distribution board 8 (FIG.3), and calculates the total electric power charge based on the total power use. The calculated total electric power charge is then displayed as in message 212a. Specifically, information indicating that the electric power charge for a power consumption of 1.0 kW/h is 100 yen is recorded in the power charge information, and power monitoring section 80 detects 1.35 kW/h of power in house 6. In that case, message 212a indicating that electricity worth 135 yen per hour is being used is displayed on display section 212, as shown in FIG.6.

A resident checks the electric power charge in accordance with message 212a. If there is no urgent matter or the like, the resident presses the "#" button in accordance with message 212b, to enable power control such as putting electric devices into the energy saving mode. If there is an urgent matter such as having a visitor, on the other hand, the resident presses the "*" button in accordance with message 212b, to disable power control such as putting electric devices into the energy saving mode. In this manner, power controller 21 can perform power control in accordance with the intention of a resident.

When a resident presses the "#" button in accordance with message 212b, power controller 21 further displays message 212c and message 212d on display section 212, as shown in FIG.7. That is, power controller 21 displays the current electric power charge in house 6 through message 212c, and displays information about candidate combinations of electric devices to be put into the energy saving mode through message 212d on display section 212.

From the information about the candidate subject devices, information about combinations of devices in ascending order of total electric power charges is displayed in message 212d. The total electric power charge based on the individual electric power charges of combined electric devices is also displayed in message 212d. By this means, the power use in house 6 is displayed as information about an electric power charge that can be instinctively evaluated, and the information about combinations of devices is displayed in ascending order of total electric power charge. Accordingly, a resident can easily make a comparison between amounts, and can readily reach a decision. In the example illustrated in FIG.7, the electric power charge for air conditioner 11 decreases in the energy saving mode by 30 yen per hour, according to the power charge information. Likewise, the electric power charge for electric lamp 12 decreases by 5 yen, and the electric power charge for television set 13 decreases by 10 yen.

By checking message 212d, a resident can immediately select (2) when he/she needs the light of electric lamp 12 to read a document in the nighttime, for example, thereby making the selecting operation easy. In this manner, power controller 21 can perform instinctive input operations, and easily perform power control in accordance with the intention of a resident.

In the example illustrated in FIG.7, electric devices (or combinations of electric devices) that are candidates for the energy saving mode, and the total electric power charges in cases where the electric devices (or the combinations of the electric devices) are in the energy saving mode are displayed. However, electric devices (or combinations of electric devices) that are candidates for the energy saving mode, and the electric power charges corresponding to the power uses by the electric devices (or the combinations of the electric devices) may be displayed.

Instead of electric power charges, total power consumptions or individual power consumptions by respective electric devices (or combinations of electric devices) may be displayed.

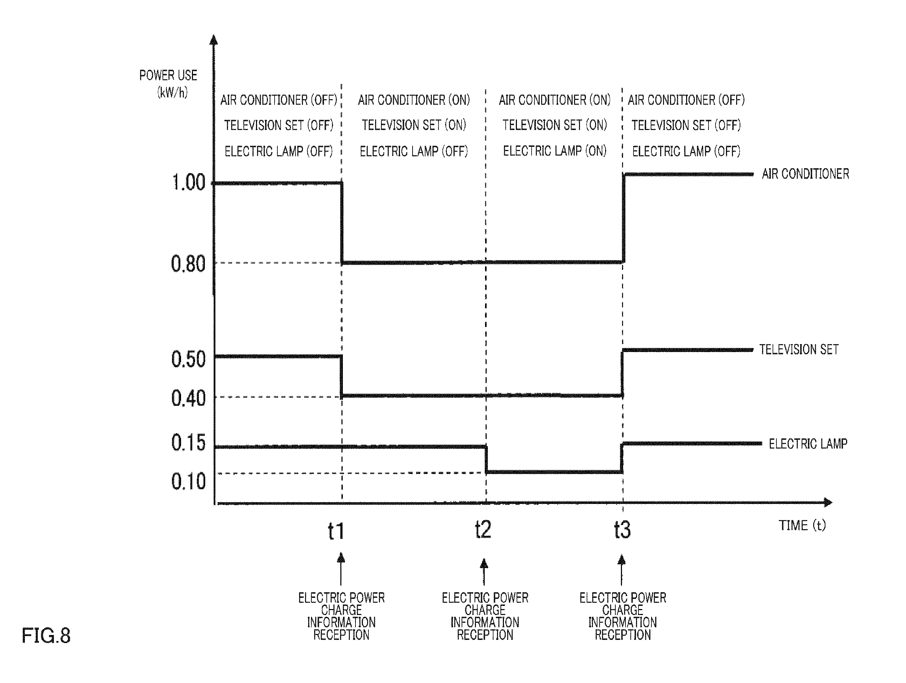

FIG.8 is a graph for explaining the power use by each electric device in home energy management system 10 (FIG.2) according to the embodiment of the present invention.

In the cases illustrated in FIG.8, power controller 21 receives power charge information transmitted from server 30 of electric power company 2 at time t1, time t2, and time t3. Upon receipt of power charge information from server 30, power controller 21 updates display section 212, to notify residents of a change in power charge information.

In a case where a resident selects air conditioner 11 and television set 13 to be put into the energy saving mode at time t1, for example, the power use by air conditioner 11 decreases by 20% (decreases from 1.0 kW/h to 0.8 kW/h, for example), and the power use by television set 13 decreases by 20% (decreases from 0.5 kW/h to 0.4 kW/h, for example). When air conditioner 11 is put into the energy saving mode, the preset indoor temperature for cooling is changed from 25°C to 28°C, for example. Likewise, the luminance of the display screen of television set 13 drops by 20%.

Likewise, in a case where a resident further selects electric lamp 12 to be put into the energy saving mode at time t2, the power use by electric lamp 12 decreases by 33% (decreases from 0.15 kW/h to 0.1 kW/h, for example). When electric lamp 12 is put into the energy saving mode, the luminance drops by 33%, for example.

In a case where a resident has an urgent matter such as an unexpected visitor, and disables all the energy saving mode at time t3, the operation mode returns to the normal operation mode in which air conditioner 11 uses 1.0 kW/h, television set 13 uses 0.5 kW/h, and electric lamp 12 uses 0.15 W/h.

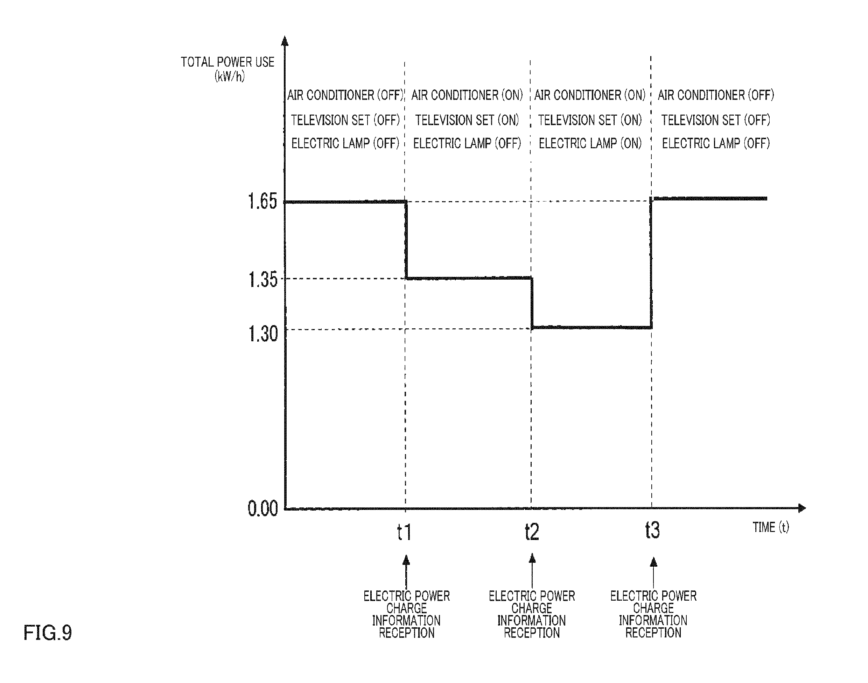

FIG.9 is a graph for explaining the total power use by the electric devices in home energy management system 10 according to the embodiment of the present invention.

In a case where air conditioner 11, electric lamp 12, and television set 13 are put into the energy saving mode at the same times as those set in FIG.8, the total power use by the electric devices in home energy management system 10 fluctuates as shown in FIG.9. In FIG.9, "ON" means that the energy saving mode is enabled. Likewise, "OFF" in FIG.9 means that the energy saving mode is disabled. In this manner, power controller 21 can perform power control in accordance with the intention of a resident.

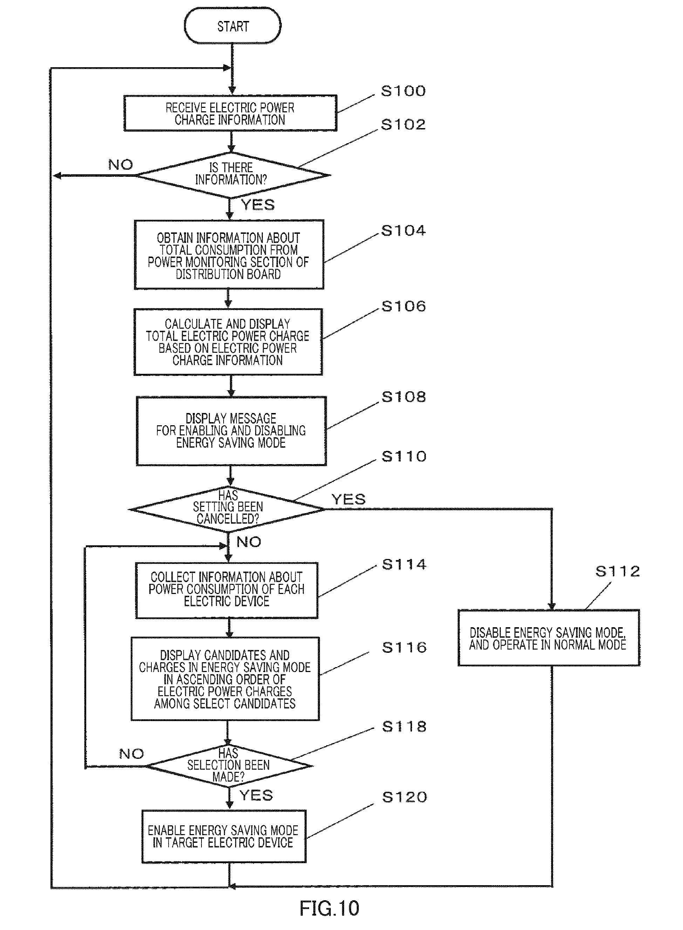

Referring now to FIGS.2, 3, 4, 5, and 10, operations of power controller 21 of telephone device 20 in home energy management system 10 are described. FIG.10 is a flowchart for explaining operations of power controller 21 mounted on telephone device 20 of home energy management system 10 according to the embodiment of the present invention.

As shown in FIG.10, power controller 21 receives power charge information from server 30 of electric power company 2 (S100, S102). Power controller 21 then obtains the information about the total power use in house 6 (power use information) detected by power monitoring section 80 of distribution board 8 (S104), and, based on the power charge information received from server 30, calculates the total electric power charge. Power controller 21 then displays the total electric power charge on display section 212 (S106).

Power controller 21 then displays a message for enabling and disabling the energy saving mode on display section 212 (S108).

If the energy saving mode is disabled through the "*" button of input section 211 for the convenience of a resident (S110), power controller 21 disables the energy saving mode for each electric device in accordance with a control signal for disabling the energy saving mode, and each electric device is reset in the normal operation mode (S112).

If the energy saving mode is selected through the "#" button of input section 211 (S110), on the other hand, power controller 21 makes inquiries to power monitoring sections 11a, 12a, and 13a of the electric devices registered as the devices to be subjected to power control, which are air conditioner 11, electric lamp 12, and television set 13, about the power use. By doing so, power controller 21 collects the power use information about the respective electric devices. Power controller 21 then stores the collected power use information about the respective electric devices into device information storage section 215 (S114).

Power controller 21 then creates information about candidate combinations of devices to be subjected to power control, based on the power use information about the respective electric devices stored in device information storage section 215. Based on the power charge information obtained from electric power company 2, and the power use information about air conditioner 11, electric lamp 12, and television set 13 stored in device information storage section 215, individual electric power charges are calculated. Based on the calculated individual electric power charges, a total electric power charge based on the individual electric power charges is calculated for each of the candidate combinations to be selected. It should be noted that power controller 21 calculates individual electric power charges and a total electric power charge based on the individual electric power charges every time power charge information is transmitted from electric power company 2.

Power controller 21 then displays, on display section 212, the information about the candidate combinations of devices to be put into the energy saving mode in the ascending order of electric power charges among the candidate combinations of electric devices, and the candidate combinations of electric devices each accompanied by total power charge information (S116). Display section 212 updates the display contents every time electric power charge calculating section 217 newly calculates individual electric power charges and a total electric power charge. Thereafter, (S100) through (S116) are repeatedly carried out. In this manner, power controller 21 newly calculates and displays, on display section 212, individual electric power charges and total electric power charges every time power charge information is transmitted from server 30 of electric power company 2. Accordingly, a resident can select electric devices to be subjected to power control, while keeping new electric power charges in mind. Thus, the resident can determine power control in accordance with the latest electric power charges.

Power controller 21 awaits until selection information for selecting a candidate combination of electric devices is input to input section 211 (S118), and controls the power use by the candidate combination of electric devices selected in accordance with the input selection information. That is, power controller 21 transmits a control signal for the energy saving mode to target electric devices among air conditioner 11, electric lamp 12, and television set 13, and enables the energy saving mode (S120).

According to this embodiment described above, as shown in FIGS.2 and 5, power controller 21 for electric devices controls the power use by electric devices (such as air conditioner 11, electric lamp 12, and television set 13 shown in FIG.2) connected to power line 9 in house 6, and includes: power line communication section 213 that communicates with the electric devices via power line 9; input section 211 that receives registration information about the electric devices and selection information as input; power information obtaining section 214 that obtains power use information about electric devices registered at input section 211 via power line communication section 213; candidate creating section 216 that creates information about candidate combinations of electric devices to be subjected to power control, based on the power use information about the respective electric devices obtained by power information obtaining section 214 from the registered electric devices among the electric devices; display section 212 that displays the information about the candidate combinations of electric devices; and power control section 218 that controls the power use by each of the registered electric devices. Power control section 218 controls the power use by a candidate combination of electric devices selected in accordance with the selection information input to input section 211.

With this structure, a resident can consciously select a device to be subjected to energy saving from the candidate combinations of electric devices displayed on display section 212. Accordingly, power control can be performed in accordance with a resident's intention, even when the power control is performed on the electric devices in house 6.

Since power controller 21 for electric devices is mounted on telephone device 20, a resident can consciously select devices to be subjected to power control among the candidate combinations of electric devices displayed on display section 212 provided on telephone device 20, and accordingly, a resident can consciously conduct power control on the electric devices in house 6.

Also, as power use information about the electric devices is displayed on display section 212, a user can select an electric device to be put into the energy saving mode while checking the power use information about the electric devices.

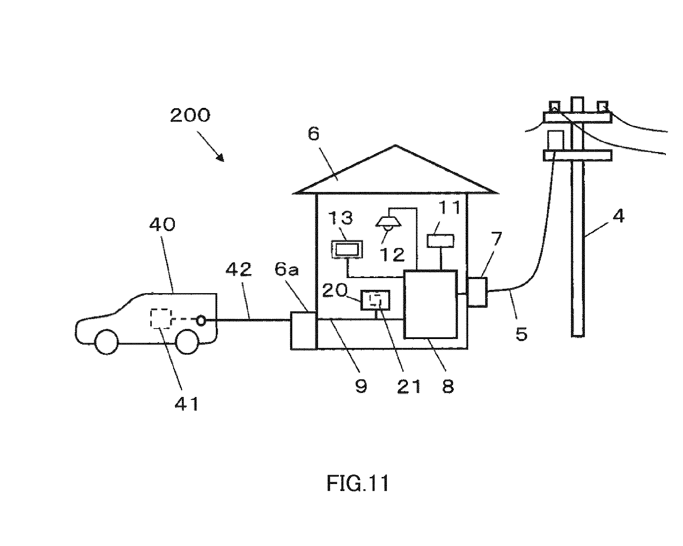

As shown in FIG.11, in home energy management system 200, power storage device 41 of vehicle 40 located outside house 6 is connected to power line 9 via power converter 6a and power-line cable 42. If the electric power charge is high, power from power storage device 41 may be used. Power converter 6a converts DC power in power storage device 41 into AC power. In a case where power from power storage device 41 is used, a switch is provided on distribution board 8, to prevent collisions between commercial power from power line 5 and power from power storage device 41.

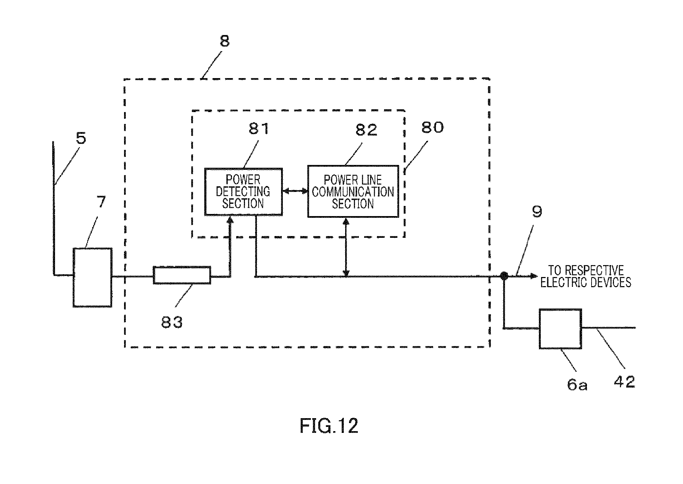

That is, as shown in FIG.12, a switch (not shown) is provided on distribution board 8, and, when power from power storage device 41 is used, power converter 6a is put into power conditioner mode. When power from power storage device 41 is not used, on the other hand, power converter 6a is turned off or put into charging mode, and power from a commercial power source is supplied from power line 5. Power storage device 41 is charged in the nighttime, which offers a low electric power rate, for example. With this structure, even when a resident cannot save electric power due to an urgent matter, the cost for purchasing electric power from electric power company 2 can be reduced by using power from power storage device 41. Instead of power storage device 41 of vehicle 40, a power storage device for household use may be provided in house 6.

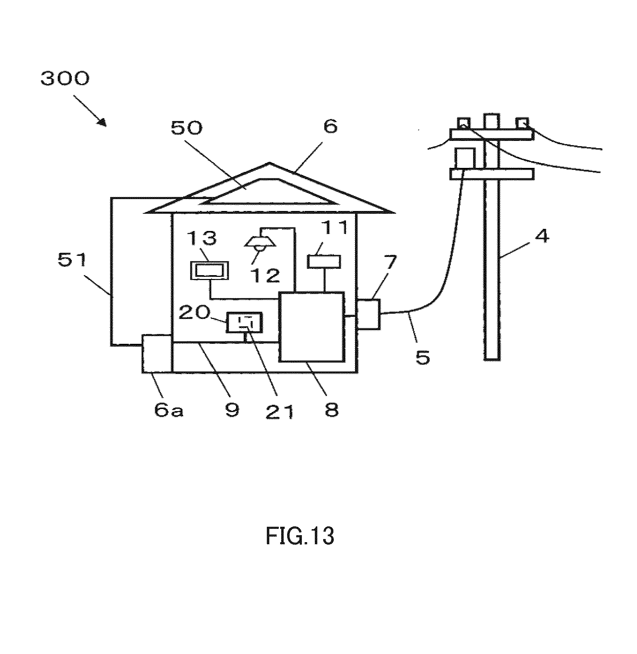

As shown in FIG.13, in home energy management system 300, solar panel 50 may be used, instead of power storage device 41 of vehicle 40. In this case, solar panel 50 and power converter 6a are connected via power-line cable 51. By this means, even when a resident cannot save electric power due to an urgent matter, the power use can be reduced by using power from solar panel 50.

Power controller 21 is mounted on telephone device 20, but the present invention is not limited to that. Power controller 21 may be mounted on some other electric devices, such as television set 13, a facsimile machine, an intercom, or a special-purpose controller.

Specific structures of the present invention are not limited to the above described embodiment, and various changes and modifications may be made to it without departing from the scope of the invention.

All the contents of the specification, drawing, and abstract included in Japanese Patent Application No. 2009-258600, filed on November 12, 2009, are incorporated herein by reference.

### Industrial Applicability

A power controller for electric devices of the present invention controls the power use by the electric devices connected to a power line in a house, and includes: a power line communication section that communicates with the electric devices via the power line; an input section that receives registration information about the electric devices and selection information as input; a power information obtaining section that obtains power use information about electric devices registered at the input section via the power line communication section; a candidate creating section that creates information about candidate combinations of electric devices to be subjected to power control, based on the power use information about the respective electric devices obtained by the power information obtaining section from the registered electric devices among the electric devices; a display section that displays the information about the candidate combinations of electric devices; and a power control section that controls the power use by each of the registered electric devices. The power control section controls the power use by a candidate combination of electric devices selected in accordance with the selection information input to the input section. By this means, a resident can consciously select a device to be subjected to power control from the candidate combinations of electric devices displayed on the display section, and can consciously conduct power control on the electric devices in the house.

Accordingly, even when power control is performed on the electric devices in the house, the power control can be performed in accordance with a resident's intention, and the present invention can be applied to a telephone device or the like having the power controller mounted thereon.

### Reference Signs List

1 Power management system
2 Electric power company
3 Power management center
4 Utility pole
5, 9 Power line
6 House
6a Power converter
7 Watt-hour meter
8 Distribution board
10, 200, 300 Home energy management system
11 Air conditioner
11a, 12a, 13a, 80 Power monitoring section
12 Electric lamp
13 Television set
20 Telephone device
21 Power controller
22 Handset
23 Communication section
24 Overall control section
25 Power source section
26 Bus
30 Server
40 Vehicle
41 Power storage device
42, 51 Power-line cable
50 Solar panel
81 Power detecting section
82, 213 Power line communication section
83 Breaker
100 Communication link
210 HEMS lighting section
211 Input section
211a HEMS button
211b Button section
212 Display section
212a, 212b, 212c, 212d Message
214 Power information obtaining section
215 Device information storage section
216 Candidate creating section
217 Electric power charge calculating section
218 Power control section

## Claims

1. A power controller that controls power use by an electric device connected to a power line,
the power controller for electric devices comprising:
a power line communication section that communicates with the electric device via the power line;
a power information obtaining section that obtains power use information about the electric device via the power line communication section;
a display section that displays the power use information associated with the electric device;
an input section that receives selection information as input, the selection information being associated with the electric device displayed on the display section; and
a power control section that controls the power use by the electric device in accordance with the selection information input to the input section.

2. The power controller according to claim 1, wherein
a plurality of electric devices are connected to the power line, and
the display section displays power use information about the electric devices.

3. The power controller according to claim 2, wherein
the display section displays a combination of the electric devices and the power use information associated with the combination, and
the input section is capable of receiving selection information as input, the selection information being associated with the combination of the electric devices.

4. The power controller according to claim 1, further comprising
a electric power charge calculating section that calculates an electric power charge corresponding to the power use information, based on power charge information transmitted from an electric power company,
wherein the display section displays the electric device and the electric power charge corresponding to the electric device.

5. The power controller according to claim 4, wherein
the electric power charge calculating section calculates the electric power charge every time the power charge information is transmitted from the electric power company, and
the display section updates display contents every time the electric power charge calculating section newly calculates the electric power charge.

6. The power controller according to claim 2, wherein the display section displays at least one of the electric device and the combination of the electric devices in ascending order of electric power charges.

7. A telephone device comprising the power controller according to claim 1, the power controller being mounted on the telephone device.

8. The telephone device according to claim 7, further comprising
a communication section that is connected to a communication link,
wherein electric power charge information transmitted from an electric power company is obtained via the communication section.

9. A power control method of controlling power use by an electric device connected to a power line,
the power control method for electric devices comprising:
communicating with the electric device via the power line;
obtaining power use information associated with the electric device via the power line;
displaying the power use information associated with the electric device;
inputting selection information associated with the displayed electric device; and
controlling the power use by the electric device in accordance with the input selection information.

10. An integrated circuit used in a power controller that controls power use by an electric device connected to a power line, the power controller being designed for electric devices,
the integrated circuit comprising:
a power line communication section that communicates with the electric device via the power line;
a power information obtaining section that obtains power use information about the electric device via the power line communication section;
a display section that displays the power use information associated with the electric device;
an input section that receives selection information as input, the selection information being associated with the electric device displayed on the display section; and
a power control section that controls the power use by the electric device in accordance with the selection information input to the input section.

## Amended claims

### Amended claims under Art. 19.1 PCT

**1.** (Amended) A power controller that is connected to an electric device via a power line, the electric device controlling power use,
the power controller comprising:
a power line communication section that communicates with the electric device via the power line;
a power information obtaining section that obtains power use information about the electric device via the power line communication section;
a display section that displays the power use information about the electric device;
an input section that receives at least one piece of power use information as input, the power use information being displayed on the display section; and
a power control section that transmits, via the power line communication section, a control signal to the electric device associated with the power use information input to the input section, the control signal in which the electric device associated with the power use information input to the input section controls the power use.

**2.** The power controller according to claim 1, wherein
a plurality of electric devices are connected to the power line, and
the display section displays power use information about the electric devices.

**3.** The power controller according to claim 2, wherein
the display section displays a combination of the electric devices and the power use information associated with the combination, and
the input section is capable of receiving selection information as input, the selection information being associated with the combination of the electric devices.

**4.** The power controller according to claim 1, further comprising
a electric power charge calculating section that calculates an electric power charge corresponding to the power use information, based on power charge information transmitted from an electric power company,
wherein the display section displays the electric device and the electric power charge corresponding to the electric device.

**5.** The power controller according to claim 4, wherein
the electric power charge calculating section calculates the electric power charge every time the power charge information is transmitted from the electric power company, and
the display section updates display contents every time the electric power charge calculating section newly calculates the electric power charge.

**6.** The power controller according to claim 2, wherein the display section displays at least one of the electric device and the combination of the electric devices in ascending order of electric power charges.

**7.** A telephone device comprising the power controller according to claim 1, the power controller being mounted on the telephone device.

**8.** The telephone device according to claim 7, further comprising
a communication section that is connected to a communication link,
wherein power charge information transmitted from an electric power company is obtained via the communication section.

**9.** (Amended) A power control method for an electric device that is connected to a power line and controls power use,
the power control method comprising:
communicating with the electric device via the power line;
obtaining power use information associated with the electric device via the power line;
causing a display section to display the power use information associated with the electric device;
inputting at least one piece of the power use information displayed on the display section; and
transmitting a control signal to the electric device associated with the input power use information via the power line, the control signal causing the electric device associated with the input power use information to control the power use.

**10.** (Amended) An integrated circuit used in a power controller connected to an electric device via a power line, the electric device controlling power use,
the integrated circuit
communicates with the electric device via the power line;
obtains power use information about the electric device via the power line; causes a display section to display the power use information about the electric device;
inputs at least one piece of the power use information displayed on the display section; and
transmits a control signal to the electric device associated with the input power use information via the power line, the control signal in which the electric device associated with the input power use information controls the power use.
